# EUROPEAN PATENT SPECIFICATION

(11) **EP 2 883 839 B1**
(45) Date of publication and mention of the grant of the patent: **26.09.2018**
(21) Application number: 13196767.1
(22) Date of filing: 11.12.2013
(51) Int. Cl.: C01G 23/00

(54) **Hydrothermal or solvothermal synthesis of iron doped strontium titanate powder**
Eisendotiertes Strontiumtitanatpulver
Poudre de titanate de strontium dopé de fer

(43) Date of publication of application: 17.06.2015
(73) Proprietor: Honeywell Romania S.R.L., Bucharest (RO)
(72) Inventor: Cobianu, Cornel P., 051434 Bucharest (RO); Serban, Bogdan Catalin, 60000 Bucharest (RO)
(74) Representative: Houghton, Mark Phillip

(56) References cited:
- LUÍS F. DA SILVA ET AL: "Novel SrTi1-xFexO3 nanocubes synthesized by microwave-assisted hydrothermal method", CRYSTENGCOMM, vol. 14, no. 11, 1 January 2012 (2012-01-01), page 4068, XP055098382, ISSN: 1466-8033, DOI: 10.1039/c2ce25229e
- STEINSVIK<1> S ET AL: "Hydrogen ion conduction in iron-substituted strontium titanate, SrTi1-xFexO3-x/2 (0=<x=<0.8)", SOLID STATE IONICS, NORTH HOLLAND PUB. COMPANY. AMSTERDAM; NL, NL, vol. 143, no. 1, 1 June 2001 (2001-06-01), pages 103-116, XP004245338, ISSN: 0167-2738, DOI: 10.1016/S0167-2738(01)00838-4
- NERI G ET AL: "FeSrTiO3-based resistive oxygen sensors for application in diesel engines", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, vol. 134, no. 2, 25 September 2008 (2008-09-25), pages 647-653, XP025429952, ISSN: 0925-4005, DOI: 10.1016/J.SNB.2008.06.007 [retrieved on 2008-06-17]
- DULOV E N ET AL: "Magnetic phase composition of strontium titanate implanted with iron ions", MATERIALS RESEARCH BULLETIN, ELSEVIER, KIDLINGTON, GB, vol. 46, no. 12, 25 August 2011 (2011-08-25), pages 2304-2307, XP028108189, ISSN: 0025-5408, DOI: 10.1016/J.MATERRESBULL.2011.08.057 [retrieved on 2011-09-03]
- BAE SANG ET AL: "Dopant dependent band gap tailoring of hydrothermally prepared cubic SrTixM1â xO3 (M=Ru,Rh,Ir,Pt,Pd) nanoparticles as visible light photocatalysts", APPLIED PHYSICS LETTERS, AMERICAN INSTITUTE OF PHYSICS, US, vol. 92, no. 10, 14 March 2008 (2008-03-14), pages 104107-104107, XP012105955, ISSN: 0003-6951, DOI: 10.1063/1.2897300
- Dairong Chen ET AL: "Hydrothermal synthesis of strontium titanate powders with nanometer size derived from di?erent precursors", , 1 January 2000 (2000-01-01), XP55098215, Retrieved from the Internet: URL:http://www.sciencedirect.com/science/a rticle/pii/S0955221900000030/pdfft?md5=9dc e0476d8f8b1457ce8107d38076174&pid=1-s2.0-S 0955221900000030-main.pdf [retrieved on 2014-01-23]

## Description

### BACKGROUND

Oxygen detection via oxygen sensors has been widely applied in aerospace, domestic and industrial boilers, and automotive exhaust gas control systems. Iron doped strontium titanate can be used as an oxygen sensing material in oxygen sensors.

"Novel SrTil-xFexO3 nanocubes synthesized by microwave-assisted hydrothermal method" to Da Silva et al in CrystEngComm, Vol. 14(1), 1 January 2012, page 4068, describes the synthesis of iron doped strontium titanate nanocubes having a cubic perovskite structure, with iron ions in a mixed 2⁺/3⁺ oxidation state and preferentially occupying the Ti⁴⁺ site. "Hydrogen ion conduction in iron-substituted strontium titanate, SrTil-xFexO3-x/2 (0 ≤ x ≤ 0.8)" to Steinsvik et al in Solid State Ionics, North Holland Pub. Company. Amsterdam; NL, Vol.143(1), 01 June 2001, pages 103-116, describes varying conductivity of iron doped strontium titanate nanocubes under varying partial pressures of oxygen and of water vapour. From this, it is suggested that the main contributions to conductivity are n-type at low oxygen partial pressure, ionic at intermediate oxygen partial pressure and p-type at high oxygen partial pressure. This suggests the existence of hydride ion conduction in the oxide. "FeSrTiO3-based resistive oxygen sensors for application in diesel engines" to Neri et al in Sensors and Actuators B: Chemical: International Journal devoted to Research and Development of Physical and Chemical Transducers, Elsevier S.A, Vol. 134(2), 25 September 2008, pages 647-653, describes characterisation of an oxygen sensor based on iron doped strontium titanate powder. It shows good temperature resistance independence and good sensor response. The sensor response was not influenced by the presence of exhaust gases. "Magnetic phase composition of strontium titanate implanted with iron ions" to Dulov et al inMaterials Research Bulletin, Elsevier, Kidlington, Vol. 46(12), 25 August 2011, pages 2304-2307, describes paramagnetic behaviour of iron-substituted strontium titanate at room temperature and superparamagnetism and ferromagnetism due to nanoparticles of α-Fe in a thin magnetic film.
"Dopant dependent band gap tailoring of hydrothermally prepared cubic SrTixMl-xO3 (M = Ru, Rh, Ir, Pt, Pd) nanoparticles as visible light photocatalysts" to Bae Sang et al in Applied Physics Letters, American Institute of Physics, Vol. 92(10), 14 March 2008, pages 104107-104102, describes catalysis of the photoreduction of water by rhodium doped strontium titanate, using 1% rhodium replacement of titanium, for λ ≥ 420nm.
"Hydrothermal synthesis of strontium titanate powders with nanometer size derived from different precursors" to Dairong Chen et al in Journal of the European Ceramic Society, 01 January 2000 describes preparation and characterisation of nanocrystalline strontium titanate using a hydrothermal method.

### SUMMARY

The present invention in its various aspects is as set out in the appended claims. The present disclosure is directed toward iron doped strontium titanate powder that can be used for oxygen detection. In particular, the present disclosure is directed toward methods for the synthesis of iron doped strontium titanate (also referred to as "strontium titanate ferrite") powder. The method can include forming or obtaining a nanostructured iron doped strontium titanate powder from one of an aqueous reaction solution (hydrothermal) and an organic solvent based reaction solution (solvothermal). The aqueous reaction solution and the organic solvent based reaction solution can include a plurality of precursors and one or more reagents that are added to a closed vessel (e.g. an autoclave). A thermal treatment is applied to the one of the aqueous reaction solution and the organic solvent based reaction solution, which can increase a pressure inside the autoclave to a value greater than 1 bar. The thermal treatment applied to the at least one of the aqueous reaction solution and the organic solvent based reaction solution including the plurality of precursors, which forms an iron doped strontium titanate precipitate in the one of the aqueous reaction solution and the organic solvent reaction solution. The forming of the iron doped strontium titanate precipitate may occur at a reaction temperature of less than 400 degrees Celsius (°C) and an autogenous pressure greater than 1 bar. For example, the autogenous pressure can be within a range of about 1bar bar to about 300 bar. The pressure can depend on a critical point of the reaction solution (e.g., the aqueous reaction solution and the organic solvent based reaction solution) and a percentage of the autoclaved filled with the reaction solution.

### DETAILED DESCRIPTION OF THE DRAWINGS

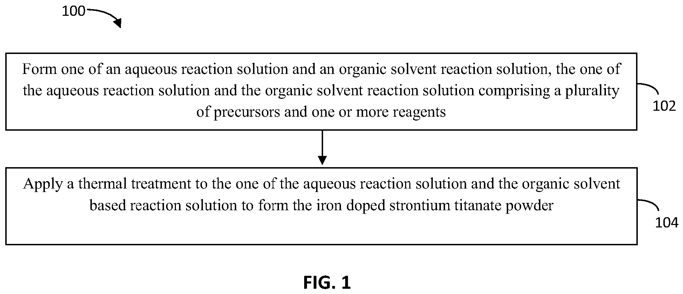

The embodiments of the present disclosure will be described, by way of example only, by reference to the FIG. 1 of the accompanying drawings in which:

FIG. 1 shows a flow diagram for a method, in accordance with at least one example of the present disclosure.

### DETAILED DESCRIPTION

As discussed herein, the present disclosure is directed toward method of forming iron doped strontium titanate (also referred to as "strontium titanate ferrite" (STFO)) powder. The method of the present disclosure provides iron doped strontium titanate powder from one of an aqueous reaction solution and an organic solvent based reaction solution. The method can provide a nanostructured, porous, single crystal powder (e.g., nanocubes, nanotubes, and nanospheres) of iron doped strontium titanate powder, having increased porosity, surface area, and crystalline dimensionality, which can increase sensitivity and response of iron doped strontium titanate powder films being used as an oxygen sensing material in oxygen sensors.

Iron doped strontium titanate powder (also referred to herein as "iron doped strontium titanate" or "strontium titanate ferrite") can be used as an oxygen resistive sensor that can be used in various industries, for example, the automotive industry. Iron doped strontium titanate having the following chemical formula: SrTi₁₋ₓFeₓO_{3-d}, where x equals 0.3 to 0.6 can behave as a p-type semiconductor in an oxygen partial pressure range, above 10⁻¹⁰ bar, and has temperature independence of its electrical resistivity in the temperature range from 450°C to 650°C, for x=0.6. That is, the oxygen sensitivity and response time of iron doped strontium titanate is not substantially affected by temperatures in that temperature range.

In previous approaches, iron doped strontium titanate powder has been synthesized by using energy intensive methods. For example, iron doped strontium titanate powder has been synthesized in solid state reactions between titanium dioxide, strontium peroxide, and iron(III) oxide at temperatures of about 1200 °C, followed by ball milling of the resulting iron doped strontium titanate material to form the iron doped strontium titanate powder. The resulting iron doped strontium titanate powder can have a particle size of about 1.5 micrometers to about 5 micrometers. The iron doped strontium titanate powder can be subsequently mixed with organic binders containing terpineol and ethyl cellulose for obtaining an iron doped strontium titanate powder paste. The iron doped strontium titanate powder paste can be deposited by screen printing technology to form a film. For example, the method of forming the film can include sintering at temperatures above 1100 °C. In some examples, to further reduce the crystalline grain size to less than 100 nanometers, the method of forming the film can include sintering at a temperature of about 2300 °C. The previous approaches have difficulty controlling the microstructure of the film, as well as the surface area and porosity, which are parameters for achieving increased sensitivity and increased response time in oxygen sensors.

The methods of the present disclosure can provide a low energy (e.g., maximum processing temperature less than 400 °C and low cost method of forming iron doped strontium titanate powder from one of an aqueous reaction solution and an organic solvent based reaction solution using an isothermal hydrothermal treatment (referred to herein as "hydrothermal treatment") or an isothermal solvothermal treatment (referred to herein as "solvothermal treatment"), respectively. A maximum temperature during the hydrothermal or solvothermal treatment can be determined by a critical point of the solvent used (e.g., water with a critical temperature at 374 °C, or an organic solvent, where the critical temperature can be below 300 °C).

In an example, the thermal treatment applied to the aqueous reaction solution can be an isothermal "hydrothermal" treatment, which is performed in a closed vessel reactor (e.g., autoclave) at a constant temperature below or even above the critical point of the aqueous solution. The autoclave can be heated at a certain temperature, and an autogeneous pressure is developed due to the vapors evaporated from the enclosed solution. In general, the percentage of filling the autoclave with liquid can be within a range of about 20 percent (%) to about 60 % for controlling the pressure inside the autoclave, and avoiding an explosion of autoclave. In an example, the percentage of filling the autoclave can be within the range of about 30 % to about 50 %. In an example, the thermal treatment applied to the organic solvent based reaction solution can be a "solvothermal" treatment, which is also performed in an autoclave as described above, but where the aqueous solution is replaced by an organic solution, while the critical point corresponds to the organic reagents. The iron doped strontium titanate powder can be used to form an iron doped strontium titanate-powder film that can be used as an oxygen sensing material in oxygen sensors. The oxygen sensing material can have increased porosity and increased response time.

In an example, STFO powder can be used to form a STFO film preparation that can be used as an oxygen sensing material. For example, in a first step a STFO slurry can be obtained by mixing the above STFO powder with terpineol (C₁₀H₁₈O, molecular mass 154.25 gram per mole (g/mol), with an STFO percent mass fraction of about (30-50) % STFO in the STFO slurry. In a second step, the STFO slurry can be deposited by a screen printing technique on an interdigitated (IDT) metallic structure. In a third step, the structure can be thermally treated at about 450 °C in air for evaporating terpieol and residual water, as well as firing the carbon from the terpineol composition. Finally, the thick film of STFO deposited on the IDT structure can be thermally treated in air at a temperature of about 150 °C above a sensor operating temperature, so that a stable polycrystalline sensing film can be obtained.

FIG. 1 shows a flow diagram for a method 100, in accordance with at least one example of the present disclosure. At step 102, method 100 can include forming one of an aqueous reaction solution and an organic solvent reaction solution in an autoclave, the one of the aqueous reaction solution and the organic solvent reaction solution comprising a plurality of precursors and one or more reagents. Various combinations of the plurality of precursors and the one or more reagents can be mixed to form the iron doped strontium titanate powder. The plurality of precursors include a titanium based precursor, a strontium based precursor, and an iron based precursor.

The plurality of precursors are chosen from titanium tetrachloride, titanium hydroxide, strontium chloride, iron (III) chloride, titanium dioxide spheres, iron (III) nitrate, strontium nitrate, strontium hydroxide, titania nanotubes, titanium nitrate, titanium acetate, strontium acetate, iron (III) acetate, titanium isopropoxide, iron (III) isopropoxide, and metatitanic acid. In forming the aqueous reaction solution and the organic solvent based reaction solution, the stoichiometry ratio for Sr/Ti/Fe atoms of the nanostructured iron doped strontium titanate powder can be 1/0.4/0.6. Any desired stoichiometry of the strontium titanate ferrite powder and associated sensing film (e.g., oxygen sensing film) can be obtained by changing the molar composition of the above precursors.

The one or more reagents are chosen from sodium hydroxide, ammonia, ethylene glycol, dimethylformamide, ethanol, 2-methoxyethanol, acetic acid, potassium hydroxide, and water. The one or more reagents can be used for dissolution/chelation of the precursors, hydrolysis and polycondensation reaction, crystallization of the reaction product, pH control and orientation of the hierarchical nanostructuring of the iron doped strontium titanate powder. In an example, the aqueous reaction solution can include one or more reagents chosen from sodium hydroxide, potassium hydroxide, and ammonia. In an example, the organic based reaction solution can include one or more reagents chosen from ethylene glycol, dimethylformamide, ethanol, 2-methoxyethanol, potassium hydroxide, and water.

At step 102, the method 100 can include applying a thermal treatment to the one of the aqueous reaction solution and the organic solvent based reaction to form the iron doped strontium titanate powder. The thermal treatment can include heating the one of the aqueous reaction solution and the organic solvent based reaction solution to a temperature for a time period, while an autogeneous pressure is developed inside the autoclave, as a function of temperature, nature of the at least one of the aqueous reaction solution and the organic solvent based reaction solution expressed by its critical point, and an initial degree of filling the autoclave with solution. In an example, the thermal treatment can be either a hydrothermal treatment or a solvothermal treatment. The hydrothermal treatment includes heating the aqueous reaction solution whereas the solvothermal treatment includes heading the organic solvent based reaction solution. A phase diagram of each liquid substance (either the aqueous solution or the organic solution) defines its critical points in terms of critical temperature and critical pressure, which can be different for hydrothermal and solvothermal methods. The critical temperature and critical pressure can be factors in selecting a process temperature, to minimize an uncontrolled situation, due to high autogeneous pressure developed above the critical point. Thus for example, the critical point of water is defined by a critical temperature of 374 °C and a critical pressure of 218 bars, while the critical point of ethanol is defined by the critical temperature of 243 °C and a critical pressure of 63.8 bars. Temperatures and pressures above the critical point generates a supercritical regime, where the fluid has no clear interface between a liquid phase and a gas phase, while it can diffuse in solids like a gas and dissolve other substances like a liquid.

In an example, the temperature of the thermal treatment can be in a range from 120 °C to 400 °C. In an example, the temperature can be less than about 200 °C, such as 180 °C and 120 °C, depending on the reaction solution which is used. As discussed herein, the method of the present disclosure can synthesize iron doped strontium titanate powder minimizing the amount of energy used. Further, the method allows more control over the nanostructure of the iron doped strontium titanate powder.

Hydrothermal and solvothermal treatment is a synthesis method, where, for more controlled nanostructuring, the chemical reactions can be in the presence of nanostructuring orientation agents, which assist in the hierarchical self-organization of the iron doped strontium titanate powders, and where the final product is the result of the thermodynamically driven spontaneous dissolution-recrystallization process, as explained by Oswald ripening effects, briefly described below. Under the specific hydrothermal/solvothermal conditions, the high pressures (e.g., equal to or greater than 1 bar, for example, a pressure within a range of about 1 bar to about 300 bar) can enhance the solubility of the precursors, diffusion, and reaction processes. The dissolution of the smaller particles can be determined by a higher fraction of energetically unfavorable, surface atoms with dangling bonds, which are easier detached from that particle. Such detached, free atoms and molecules can diffuse in the solution, and when their concentration is higher than a certain value, the solution becomes supersaturated. At this point of supersaturation, the free molecules condense on the surface of a larger particle which thus becomes even more energetically stable, due to a further decrease fraction of atoms on the surface with respects to atoms in the volume. The process of attaching of the free molecule to the larger molecule is "helped" by the structuring orientation agents, which will thus determine nanostructures formation with different morphologies (e.g., nanocubes, nanowires, nanoflowers, etc.) When such free molecules contain atoms which are different from the host atoms, a further diffusion of these free molecules inside the host structure can occur by the so-called Kirkendall effect, and thus complex multi component materials are formed like in the case of iron doped strontium titanate powder, when the host material is titanium dioxide (TiO₂), while strontium and iron ions are diffusing inside the TiO₂ composition.

In an example, the method 100 can include forming or obtaining the nanostructured iron doped strontium titanate powder from the aqueous reaction solution. In an example when the aqueous reaction solution is formed, method 100 can include forming the aqueous reaction solution including the plurality of precursors chosen from titanium tetrachloride, titanium hydroxide, metatitanic acid, strontium acetate, strontium chloride, iron (III) chloride, iron acetate, titanium dioxide spheres, iron (III) nitrate, one of strontium nitrate and strontium hydroxide, titania nanotubes. In an example when the aqueous reaction is formed, the method 100 can include selecting the one or more reagents from sodium hydroxide, potassium hydroxide, and ammonia. In an example, the method 100 can include forming an aqueous reaction solution including titanium tetrachloride, strontium chloride, and iron (III) chloride and sodium hydroxide. The titanium tetrachloride can be used to prepare titanium hydroxide. For example, titanium tetrachloride can be added to water to form titanium (IV) oxychlorine and titanium hydroxide can be formed by adding sodium hydroxide to the titanium (IV) oxychlorine until the pH is about 14. The titanium hydroxide, strontium chloride, and the iron (III) chloride can be combined under stirring to form the aqueous reaction solution. A hydrothermal treatment can be applied to the aqueous reaction solution to form the iron doped strontium titanate powder. For example, the aqueous reaction solution can be transferred to a reactor such as an autoclave and the aqueous solution including the iron doped strontium titanate precipitate can be heated (e.g., in an oven) to a reaction temperature above or less than a critical temperature for the reagent used, which can be less than 400 °C, while the percentage of the autoclave filled with the reaction solution can be less than 50 % of the autoclave volume. . In an example, the autoclave is heated to about 180 °C for a time period, for example, about 12 to about 24 hours. Other time periods and temperatures are possible. In an example, the iron doped strontium titanate powder can have a porous crystalline nanocube structure.

In an example, the method 100 can include forming an aqueous reaction solution including titania spheres, strontium nitrate, iron (III) nitrate and ammonia. In an example, the method 100 can include forming the titania spheres. Forming the titania spheres can include dissolving titanium isopropoxide in ethanol followed by controlled hydrolysis, under continuous stirring for 10 minutes until a white precipitate is obtained. The obtained titania spheres can be added to an aqueous solution of ammonia. Strontium nitrate and iron (III) nitrate can be added to the aqueous solution of ammonia and titania spheres to form an aqueous reaction solution. A hydrothermal treatment can be applied to the aqueous reaction solution to form the iron doped strontium titanate powder. For example, the aqueous reaction solution can be transferred to a reactor such as an autoclave and the autoclave can be heated (e.g., in an oven) to a temperature less than 400 °C, while the percentage of the autoclave filled with the aqueous solution can, less than 50%. In an example, the aqueous solution including an iron doped strontium titanate precipitate can be heated to about 180 °C for a time period, for example, about 12 to about 24 hours. Other time periods and temperatures are possible. In an example, the iron doped strontium titanate powder can have a porous crystalline nanosphere structure.

In an example, the method 100 can include forming an aqueous reaction solution including titania nanotubes, one of strontium nitrate and strontium hydroxide, iron (III) nitrate and ammonia. In an example, the method 100 can include forming the titania nanotubes. The titania nanotubes, the one of strontium nitrate and strontium hydroxide, and iron (III) nitrate can be added to an aqueous solution of ammonia to form the aqueous reaction solution. A hydrothermal treatment can be applied to the aqueous reaction solution to form the iron doped strontium titanate powder. For example, the aqueous reaction solution can be transferred to a reactor (e.g., autoclave), where the percentage of the autoclave filled with the aqueous solution can be less than 50%. The hydrothermal treatment can be applied to the autoclave to heat the aqueous solution including the iron doped strontium titanate precipitate to a temperature in a range from 120 °C to 400 °C. In an example, the autoclave can be heated (e.g., in an oven) to about 120 °C to about 130 °C for a time period, for example, about 15 to about 20 hours. Other time periods and temperatures are possible. In an example, the iron doped strontium titanate powder can have a porous crystalline nanotube structure.

In an example, the method 100 can include separating the iron doped strontium titanate powder from the aqueous reaction solution. For example, separating can include at least one of centrifugation and filtration. The method 100 can include washing the iron doped strontium titanate powder. In an example when an aqueous reaction solution was formed, the iron doped strontium titanate powder can be washed with acetic acid. The method 100 can include drying the iron doped strontium titanate powder. For example, the iron doped strontium titanate powder can be dried in an over at about 50 °C to about 60 °C.

In an example, the method 100 can include forming or obtaining the nanostructured iron doped strontium titanate powder from the organic solvent based solution. In an example when the organic solvent based solution is formed, method 100 can include forming the organic solvent based solution including the plurality of precursors chosen from titanium nitrate, strontium nitrate, iron (III) nitrate, titanium acetate, strontium acetate, iron (III) acetate, titanium chloride, strontium chloride, iron (III) chloride, titanium isopropoxide, iron (III) isopropoxide, metatitanic acid, and strontium hydroxide. In an example when the organic solvent based solution is formed, the method 100 can include selecting the one or more reagents from ethanol, 2-methoxyethanol, potassium hydroxide, ethylene glycol, dimethylformamide, and water.

In an example, the method 100 can include forming an organic solvent based reaction solution including titanium nitrate, strontium nitrate, iron (III) nitrate, ethylene glycol, and dimethylformamide. The method 100 can include transferring the organic solvent based reaction solution to a reactor (e.g., an autoclave), where the degree of autoclave filling with solution to be lower than 50%. A solvothermal treatment can be applied to the reactor to heat the organic based solvent reaction solution including the iron doped strontium titanate precipitate to a reaction temperature above or less than a critical temperature for the reagent used, which can be below 300 °C for a time period. In an example, the reaction temperature can be within a range of about 40 °C greater than the critical temperature and about 250 °C less than the critical temperature. For example, the reaction temperature can be within a range of about 15 °C greater than the critical temperature and about 200 °C less than the critical temperature. In an example, the organic solvent based reaction solution to form the iron doped strontium titanate powder can be heated to a reaction temperature of about 180 °C for about 12 hours to about 24 hours.

In an example, the method 100 can include forming an organic solvent based reaction solution including titanium acetate, strontium acetate, and iron (III) acetate, and ethanol. The method 100 can include transferring the organic solvent based reaction solution to a reactor (e.g., an autoclave). A solvothermal treatment can be applied to the reactor to heat the organic solvent based reaction solution to form iron doped strontium titanate powder to a temperature above, or less than critical temperature of the solvent, which in most of the cases can be lower than 300 °C for a time period. In an example, the organic solvent based reaction solution to form the iron doped strontium titanate powder can be heated to a reaction temperature of between about 230 °C and about 250 °C for about 4 hours, where the critical point for ethanol is 241 °C and 63 bars.

In an example, the method 100 can include forming an organic solvent based reaction solution including titanium chloride, strontium chloride, and iron (III) chloride, and ethanol. The method 100 can include transferring the organic solvent based reaction solution to a reactor (e.g., an autoclave). A solvothermal treatment can be applied to the reactor to heat the organic solvent based reaction solution to form the iron doped strontium titanate powder to a temperature less than 300 °C for a time period. In an example, the organic solvent based reaction solution to form the iron doped strontium titanate powder can be heated to a reaction temperature of about 200 °C for about 5 hours.

In an example, the method 100 can include forming an organic solvent based reaction solution including titanium acetate, strontium acetate, and iron (III) acetate, and ethanol. The method 100 can include transferring the organic solvent based reaction solution to a reactor (e.g., an autoclave). A solvothermal treatment can be applied to the reactor to heat the organic solvent based reaction solution to form the iron doped strontium titanate powder to a temperature less than 300 °C for a time period. In an example, the organic solvent based reaction solution to form the iron doped strontium titanate powder can be heated to about 250 °C for about 4 hours, where the critical point for ethanol is 241 °C and 63 bars.

In an example, the method 100 can include forming an organic solvent based reaction solution including titanium isopropoxide, strontium acetate, iron (III) isopropoxide, and 2-methoxyethanol. In this example, the organic solvent based reaction solution can also include additional reagents including a tri-block copolymer, water, and ammonium hydroxide. The method 100 can include transferring the organic solvent based reaction solution to a reactor (e.g., an autoclave). A solvothermal treatment can be applied to the reactor to heat the organic solvent based reaction solution to form iron doped strontium titanate powder to a temperature less than 300 °C for a time period. In an example, the organic solvent based reaction solution to form iron doped strontium titanate powder can be heated to about 200 °C for about 4 hours.

In an example, the method 100 can include forming an organic solvent based reaction solution including metatitanic acid, strontium nitrate, iron (III) nitrate, ethanol, potassium hydroxide, and water. The method 100 can include transferring the organic solvent based reaction solution to a reactor (e.g., an autoclave). A solvothermal treatment can be applied to the reactor to heat the organic solvent based reaction solution to form iron doped strontium titanate powder to a temperature less than 300 °C for a time period. In an example, the organic solvent based reaction solution to form iron doped strontium titanate powder can be heated to about 150 °C to about 170 °C for about 5 hours. Different time intervals can be used, depending on the reaction rate of the precursors, nucleation rate, and particle size and morphology which is targeted.

In an example, the method 100 can include forming an organic solvent based reaction solution including titanium isopropoxide, strontium hydroxide, iron (III) nitrate, ethanol, 2-methoxyethanol, water, and potassium hydroxide. The method 100 can include transferring the organic solvent based reaction solution to a reactor (e.g., an autoclave). A solvothermal treatment can be applied to the reactor to heat organic solvent based reaction solution to form the iron doped strontium titanate powder to a temperature less than 300 °C for a time period. In an example, the organic solvent based reaction solution to form iron doped strontium titanate powder can be heated to about 240 °C for about 15 hours to about 20 hours.

In an example, the method 100 can include separating the iron doped strontium titanate powder from the organic solvent based reaction solution. For example, separating can include at least one of centrifugation and filtration. The method 100 can include washing the iron doped strontium titanate powder. In an example when an organic solvent based reaction is formed, the iron doped strontium titanate powder can be washed with ethanol. The method 100 can include drying the iron doped strontium titanate powder. For example, the iron doped strontium titanate powder can be dried in an over at about 50 °C to about 80 °C.

### Examples

The following examples are given to illustrate, but not limit, the scope of this disclosure.

### Materials

Precursor: Titanium isopropoxide (Ti(OC₃H₇₋ᵢₛₒ)₄; molar mass = 284,215 g/mol)
Precursor: Titanium (IV) oxychloride (TiOCl₂; molar mass =134.77 g/mol)
Precursor: Titanium nitrate (TiNO₃)₄; molar mass (anhydrous) = 299.931 g/mol; molar mass (tetrahydrate) = 371.99 g/mol)
Precursor: Titanium tetrachloride (TiCl₄₂; molar mass = 189.67 g/mol)
Precursor: Titanium dioxide spheres (TiO₂; molar mass = 79.86 g/mol)
Precursor: Titania nanotubes (TiO₂; molar mass = 79.86 g/mol)
Precursor: Titanium acetate (Ti(CH₃COO)₄; molar mass = 284.04 g/mol)
Precursor: Strontium acetate (Sr(C₂H₃O₂)₂; 3% w/w water; molar mass = 205.7 g/mol not considering water)
Precursor: Strontium nitrate (Sr(NO₃)₃; molar mass (anhydrous) = 211.63 g/mol; molar mass (tetrahydrate) = 283.69 g/mol)
Precursor: Iron (III) nitrate (Fe(NO₃)₃; molar mass = 241.86 g/mol)
Precursor: Strontium chloride (SrCl₂; molar mass = 158.53 g/mol (Anhydrous))
Precursor: Strontium hydroxide (Sr(OH)₂; molar mass = 121.63 g/mol)
Precursor: Iron (III) nitrate (Fe(NO₃)₃; molar mass (nonahydrate) = 403.99 g/mol; molar mass (anhydrous) = 241.89 g/mol; molar mass (hexahydrate) = 403.99 g/mol)
Precursor: Iron(III) chloride (FeCl₃; molar mass = 162.2 g/mol)
Precursor: Iron(III) isopropoxide (Fe(OC₃H₇₋ᵢₛₒ)₃; molar mass = 233.11 g/mol)
Precursor: Iron(III) acetate (C₁₄H₂₇Fe₃O₁₈; molar mass t = 650.9 g/mol)
Precursor: Metatitanic acid (H₄TiO₄; molar mass =115.89 g/mol)
Reagent: Sodium hydroxide (NaOH; molar mass = 39.99 g/mol)
Reagent: Ammonia
Reagent: Ethylene glycol
Reagent: Potassium hydroxide
Reagent: Water
Reagent: 2-methoxyethanol (C₃H₈O₂; molar mass = 76.09 g/mol)
Reagent: Ethanol (C₂H₅OH; molar mass = 46.07 g/mol)
Reagent: Dimethylformamide (C₃H₇NO; molar mass = 73.09 g/mol)
Reagent: Tri-block copolymer (Poly(ethylene glycol)-block-(poly) propylene glycol-block-poly Ethylene glycol; PO₂₀EO₇₀PO₂₀; molar mass = 5800 g/mol; P123; available from Sigma-Aldrich Corporation)
Reagent: Water
Reagent: Ammonium hydroxide

### Equipment

Reactor: Teflon lined stainless steel autoclave (a "Buchiglasuster", midiclave steel, (0.1-1) liter, pressure 200 bar, temperature 300 °C) add brand/type)

Thermostatic bath: "Buchiglasuster" with heating jacket, sight glasses and drain valve

### Example 1: Formation of iron doped strontium titanate powder (STFO60) using titanium tetrachloride, strontium chloride, and iron (III) chloride

An aqueous solution of titanium (IV) oxychloride (TiOCl₂) is formed by adding titanium tetrachloride (1.2 millimoles) drop-wise to water (1.2 millimoles) at a temperature of about 1°C. Titanium hydroxide (Ti(OH)₄; 1.2 millimoles) is formed by mixing the aqueous solution of titanium (IV) oxychloride with sodium hydroxide (NaOH; 0.8 grams in 20 milliliters of solution) until the resulting titanium hydroxide solution has a pH of 14. Strontium chloride (3 millimoles) and iron (III) chloride (1.8 millimoles) are slowly added to the titanium hydroxide solution (1.2 millimoles) while mixing to form an aqueous reaction solution. The amounts of the titanium hydroxide, strontium chloride and the iron (III) chloride are amounts selected to provide for an iron doped strontium titanate powder with molar ratio of ions as follows: Sr/Ti/Fe=1/0.4/0.6.

The aqueous reaction solution is transferred to a reactor (e.g., an autoclave) immersed in a thermostatic bath at 80 °C for 15 minutes. A reaction precipitate forms within the aqueous reaction solution. A thermal treatment (e.g., isothermal hydrothermal conditions) is applied to the previously treated aqueous reaction solution by heating the reactor to 180 °C for about 24 hours. The aqueous reaction solution is filtered and the iron doped strontium titanate powder is collected. The iron doped strontium titanate powder is washed in 1 molar acetic acid and is dried in an over at 50 °C. The iron doped strontium titanate powder has a uniform cubic crystalline nanoparticle.

### Example 2: Formation of iron doped strontium titanate powder (STFO60) using titania spheres, strontium nitrate, iron (III) nitrate

Titania spheres (1.2 millimoles) are mixed with an aqueous solution of ammonia (24 weight percent ammonia; 12.6 grams of ammonia added to 40 grams of water)) to form a titania sphere solution. Strontium nitrate (3 millimoles) and iron (III) nitrate (1.8 millimoles) are added to the titania sphere solution to form an aqueous reaction solution. The amounts of the titania spheres, strontium nitrate, and iron (III) nitrate are selected to provide for an iron doped strontium titanate powder with molar ratio of ions as follows: Sr/Ti/Fe=1/0.4/0.6.

The aqueous reaction solution is transferred to a reactor (e.g., an autoclave). An isothermal hydrothermal treatment is applied to the aqueous reactions solution by placing the reactor is placed in an over at 180 °C for about 12 to 24 hours to form the iron doped strontium titanate powder. The aqueous reaction solution is filtered and the iron doped strontium titanate powder is collected. The iron doped strontium titanate powder is washed in 1 molar acetic acid and is dried in an over at 50 °C. The iron doped strontium titanate powder has a uniform cubic crystalline nanoparticle.

### Example 3: Formation of iron doped strontium titanate powder (STFO60) using titania nanotubes, strontium nitrate, and iron (III) nitrate

Titania nanotubes (1.2 millimoles), strontium nitrate (3 millimoles), and iron (III) nitrate (1.8 millimoles) are added to an aqueous solution of ammonia (24 weight percent ammonia; 12.6 grams of ammonia added to 40 grams of water) to form an aqueous reaction mixture. The amounts of the titania nanotubes, strontium nitrate, and iron (III) nitrate are selected to provide for an iron doped strontium titanate powder with molar ratio of ions as follows: Sr/Ti/Fe=1/0.4/0.6.

The aqueous reaction solution is transferred to a reactor (e.g., an autoclave). A thermal treatment is applied to the aqueous reactions solution by placing the reactor is placed in an over at 180 °C for about 12 to 24 hours to form the iron doped strontium titanate powder. The aqueous reaction solution is filtered and the iron doped strontium titanate powder is collected. The iron doped strontium titanate powder is washed in 1 molar acetic acid and is dried in an over at 50 °C. The iron doped strontium titanate powder has a uniform cubic crystalline nanoparticle.

### Example 4: Formation of iron doped strontium titanate powder (STFO 60) using titanium nitrate, strontium nitrate, and iron (III) nitrate

Titanium nitrate (1.2 millimoles), strontium nitrate (3 millimoles), and iron (III) nitrate (1.8 millimoles) are dissolved in ethylene glycol (_180 millimoles; 10.8 grams) and dimethylformamide (180 millimoles; 13.11 grams) forming an organic solvent based reaction solution. The amounts of the titanium nitrite, strontium nitrate, and iron (III) nitrate are selected to provide for an iron doped strontium titanate powder with molar ratio of ions as follows: Sr/Ti/Fe=1/0.4/0.6.

The organic solvent based reaction solution is transferred to a reactor (e.g., an autoclave). A thermal treatment (e.g., solvothermal treatment) is applied to the organic solvent based reaction solution by placing the reactor in an oven at 180 °C for about 12 to 24 hours to form the iron doped strontium titanate powder. The organic solvent based reaction solution is filtered and the iron doped strontium titanate powder is collected. The iron doped strontium titanate powder is washed in ethanol and is dried in an over at 80 °C.

### Example 5: Formation of iron doped strontium titanate powder (STFO60) using titanium acetate, strontium acetate, and iron (III) acetate

Titanium acetate (1.2 millimoles), strontium acetate (3 millimoles), and iron (III) acetate (1.8 millimoles) were dissolved in ethylene glycol (10.8 grams) and dimethylformamide (13.11 grams) forming an organic solvent based reaction solution. The amounts of the titanium acetate, strontium acetate, and iron (III) acetate are selected to provide for an iron doped strontium titanate powder with molar ratio of ions as follows: Sr/Ti/Fe=1/0.4/0.6.

The organic solvent based reaction solution is transferred to a reactor (e.g., an autoclave). A thermal treatment (e.g., solvothermal treatment) is applied to the organic solvent based reaction solution by placing the reactor in an oven at 250 °C for about 4 hours to form the iron doped strontium titanate powder. The organic solvent based reaction solution is filtered and the iron doped strontium titanate powder is collected. The iron doped strontium titanate powder is washed in ethanol and is dried in an over at 80 °C.

### Example 6: Formation of iron doped strontium titanate powder (STFO60) using strontium acetate, titanium isopropoxide, and iron(III) isopropoxide

Dehydrated titanium isopropoxide (1.2 millimoles), strontium acetate (3 millimoles), and iron (III) isopropoxide (1.8 millimoles) were dissolved individually in 2-methoxyethanol (60 millimoles) forming an organic solvent based reaction solution. The amounts of the titanium isopropoxide, strontium acetate, and iron (III) isopropoxide are selected to provide for an iron doped strontium titanate powder with molar ratio of ions as follows: Sr/Ti/Fe=1/0.4/0.6.

The organic solvent based reaction solution is transferred to a reactor (e.g., an autoclave). A tri-block copoloymer (0.05 millimoles), water (6 millimoles) and acetic acid (6 millimoles) is added to the organic solvent based reaction solution. A thermal treatment (e.g., solvothermal treatment) is applied to the organic solvent based reaction solution by placing the reactor in an oven at 200 °C for about 4 hours to form the iron doped strontium titanate powder. The organic solvent based reaction solution is filtered and the iron doped strontium titanate powder is collected. The iron doped strontium titanate powder is washed in ethanol and is dried in an over at 80 °C.

### Example 7: Formation of iron doped strontium titanate powder (STFO 60) using metatitanic acid, strontium nitrate, and iron (III) nitrate

Metatitanic acid (1.2 millimoles), strontium nitrate (3 millimoles), and iron (III) nitrate (1.8 millimoles) were dissolved in a solution including ethanol (60 ml), potassium hydroxide (14.6 grams), and water (0.108 grams) forming an organic solvent based reaction solution. The amounts of the metatitanic acid, strontium nitrate, and iron (III) nitrate are selected to provide for an iron doped strontium titanate powder with molar ratio of ions as follows: Sr/Ti/Fe=1/0.4/0.6.

The organic solvent based reaction solution is transferred to a reactor (e.g., an autoclave). A thermal treatment (e.g., solvothermal treatment) is applied to the organic solvent based reaction solution by placing the reactor in an oven at 150 °C for about 5 hours to form the iron doped strontium titanate powder. The organic solvent based reaction solution is filtered and the iron doped strontium titanate powder is collected. The iron doped strontium titanate powder is washed in ethanol and is dried in an over at 80 °C.

### Example 8: Formation of iron doped strontium titanate powder (STFO60) using titanium isopropoxide, strontium hydroxide, and iron (III) nitrate

Titanium isopropoxide (1.2 millimoles), strontium hydroxide (3 millimoles), and iron (III) nitrate (1.8 millimoles) were dissolved in a solution including ethanol (30 milliliters, 2-methoxyethanol (30 milliliters), potassium hydroxide (13.46 grams), and water (0.108 grams) forming an organic solvent based reaction solution. The amounts of the titanium isopropoxide, strontium hydroxide, and iron (III) nitrate are selected to provide for an iron doped strontium titanate powder with molar ratio of ions as follows: Sr/Ti/Fe=1/0.4/0.6.

The organic solvent based reaction solution is transferred to a reactor (e.g., an autoclave). A thermal treatment (e.g., solvothermal treatment) is applied to the organic solvent based reaction solution by placing the reactor in an oven at 240 °C for about 15 hours to form the iron doped strontium titanate powder. The organic solvent based reaction solution is filtered and the iron doped strontium titanate powder is collected. The iron doped strontium titanate powder is washed in ethanol and is dried in an over at 80 °C.

### Example 9: Formation of iron doped strontium titanate powder (STFO60) using strontium chloride, titanium tetrachloride, and iron(III) chloride

Titanium tetrachloride (1.2 millimoles), strontium chloride (3 millimoles), and iron (III) chloride (1.8 millimoles) were dissolved in a solution including ethanol (60 milliliters), forming an organic solvent based reaction solution. The amounts of the titanium tetrachloride, strontium chloride, and iron (III) chloride are selected to provide for an iron doped strontium titanate powder with molar ratio of ions as follows: Sr/Ti/Fe=1/0.4/0.6.

The organic solvent based reaction solution is transferred to a reactor (e.g., an autoclave). A thermal treatment (e.g., solvothermal treatment) is applied to the organic solvent based reaction solution by placing the reactor in an oven at 200 °C for about 5 hours to form the iron doped strontium titanate powder. The organic solvent based reaction solution is filtered and the iron doped strontium titanate powder is collected. The iron doped strontium titanate powder is washed in ethanol and is dried in an over at 80 °C.

### Additional Notes & Examples

Examples of the present disclosure include methods of forming iron doped strontium titanate powder.

In Example 1, includes subject matter directed to a method of forming iron doped strontium titanate powder. The method includes forming one of an aqueous reaction solution and an organic solvent reaction solution, the one of the aqueous reaction solution and the organic solvent reaction solution comprising a plurality of precursors and one or more reagents, and applying a thermal treatment to the one of the aqueous reaction solution and the organic solvent reaction solution to form the iron doped strontium titanate powder, the thermal treatment comprising heating the one of the aqueous reaction solution and the organic solvent reaction solution to a reaction temperature for a time period at a reaction pressure, wherein the first temperature is less than 400 degrees Celsius.

In Example 2, the subject matter of Example 1 can be optionally configured such that the plurality of precursors are chosen from strontium nitrate, strontium acetate, strontium chloride, strontium hydroxide, titanium tetrachloride, titanium (IV) oxychloride, titanium isopropoxide, titanium nitrate, titanium acetate, titania nanotubes, titania (nano) spheres, metatitanic acid, iron (III) chloride, iron (III) nitrate, iron (III) acetate, and iron (III) isopropoxide.

In Example 3, the subject matter of any one or any combination of Examples 2 or 3 is optionally configured such that the one or more reagents are chosen from sodium hydroxide, ammonia, ethylene glycol, dimethylformamide, ethanol, 2-methoxyethanol, potassium hydroxide, and water.

In Example 4, the subject matter of any one or any combination of Examples 1 through 3 is optionally configured to include forming the aqueous reaction solution. The plurality of precursors is chosen from one of: titanium tetrachloride, strontium chloride, and iron(III) chloride; titanium dioxide spheres, iron (III) nitrate, and one of strontium nitrate and strontium hydroxide; and titania nanotubes, strontium nitrate, and iron (III) nitrate.

In Example 5, the subject matter of any one or any combination of Examples 1 through 4 is optionally configured such that when the plurality of precursors is titanium tetrachloride, strontium chloride, and iron (III) chloride, the one or more reagent includes sodium hydroxide.

In Example 6, the subject matter of any one or any combination of Examples 1 through 5 is optionally configured such that when the plurality of precursors is at least one of: titanium dioxide spheres, iron (III) nitrate, and one of strontium nitrate and strontium hydroxide, and titania nanotubes, strontium nitrate, and iron (III) nitrate, the one or more reagent includes ammonia.

In Example 7, the subject matter of any one or any combination of Examples 1 through 6 is optionally configured to include forming the organic solvent based reaction solution, the plurality of precursors are chosen from strontium nitrate, strontium acetate, strontium chloride, strontium hydroxide, titanium isopropoxide, titanium nitrate, titanium acetate, metatitanic acid, iron (III) chloride, iron (III) nitrate, iron (III) acetate, and iron (III) isopropoxide.

In Example 8, the subject matter of any one or any combination of Examples 1 through 7 is optionally configured such that when the plurality of precursors includes titanium nitrate, strontium nitrate, and iron (III) nitrate, the one or more reagent includes ethylene glycol and dimethylformamide.

In Example 9, the subject matter of any one or any combination of Examples 1 through 8 is optionally configured such that, when the plurality of precursors include at least one of: titanium acetate, strontium acetate, and iron (III) acetate; and titanium chloride, strontium chloride, and iron (III) chloride, the one or more reagent includes ethanol.

In Example 10, the subject matter of Examples 1 through 9 is optionally configured such that when the plurality of precursors include titanium isopropoxide, strontium acetate, and iron (III) isopropoxide, the one or more reagent includes 2-methoxyethanol, and wherein the organic solvent based reaction solution further includes at least one reagent chosen from at least one of a tri-block copolymer, water, ammonium, and potassium hydroxide.

In Example 11, the subject matter of any one or any combination of Examples 1 through 10 is optionally configured such that when the plurality of precursors include metatitanic acid, strontium nitrate, and iron (III) nitrate, and the one or more reagent includes a plurality of reagents includes ethanol, potassium hydroxide, and water.

In Example 12, the subject matter of any one or any combination of Examples 1 through 11 is optionally configured such that when the plurality of precursors include titanium isopropoxide, strontium hydroxide, and iron (III) nitrate, the one or more reagent includes a includes ethanol, 2-methoxyethanol, water, and potassium hydroxide.

In Example 13, the subject matter of any one or any combination of Examples 1 through 12 is optionally configured such that the reaction temperature is within a range of from about 150 degrees Celsius to about 400 degrees Celsius.

In Example 14, the subject matter of any one or any combination of Examples 1 through 13 is optionally configured to include separating the iron doped strontium titanate powder from the one of the aqueous reaction solution and the organic solvent based reaction solution; washing the iron doped strontium titanate powder; and drying the iron doped strontium titanate powder.

In Example 15, the subject matter of any one or any combination of Examples 1 through 14 is optionally configured such that the reaction pressure is within a range of about 1bar bar to about 300 bar.

The scope of the invention should be determined with reference to the appended claims, along with the full scope of equivalents to which such claims are entitled.

In the application, the terms "including" and "in which" are used as the plain-English equivalents of the respective terms "comprising" and "wherein." Also, in the following claims, the terms "including" and "comprising" are open-ended, that is, a method, a battery, or an energy device that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated.

Values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" should be interpreted to include not just 0.1% to 5%, inclusive, but also the individual values (e.g., 1%, 2%, 3%, and 4%) and the sub-ranges (e.g., 0.1% to 0.5%, 1.1% to 2.2%, 3.3% to 4.4%) within the indicated range. As used herein, the term "about" can be defined to include a margin of error, for example, at least +/- 10%.

The above description is intended to be illustrative, and not restrictive. For example, the above-described examples (or one or more aspects thereof) may be used in combination with each other.

## Claims

1. A method of forming iron doped strontium titanate powder, comprising:
forming one of an aqueous reaction solution and an organic solvent reaction solution, the one of the aqueous reaction solution and the organic solvent reaction solution comprising a plurality of precursors and one or more reagents, wherein the plurality of precursors are chosen from strontium nitrate, strontium acetate, strontium chloride, strontium hydroxide, titanium tetrachloride, titanium (IV) oxychloride, titanium isopropoxide, titanium nitrate, titanium acetate, titania nanotubes, titania (nano) spheres, metatitanic acid, iron (III) chloride, iron (III) nitrate, iron (III) acetate, and iron (III) isopropoxide and the one or more reagents are chosen from sodium hydroxide, ammonia, ethylene glycol, dimethylformamide, ethanol, 2-methoxyethanol, potassium hydroxide, and water; and
applying a thermal treatment to the one of the aqueous reaction solution and the organic solvent reaction solution to form the iron doped strontium titanate powder, the thermal treatment comprising heating the one of the aqueous reaction solution and the organic solvent reaction solution to a reaction temperature within a range of from 120 degrees Celsius to 400 degrees Celsius and a reaction pressure within a range of 1 bar to 300 bar.

2. The method of claim 1, comprising forming the aqueous reaction solution, the plurality of precursors is chosen from one of:
titanium tetrachloride, strontium chloride, and iron(III) chloride;
titanium dioxide spheres, iron (III) nitrate, and one of strontium nitrate and strontium hydroxide; and
titania nanotubes, strontium nitrate, and iron (III) nitrate.

3. The method of claim 2, wherein, when the plurality of precursors is titanium tetrachloride, strontium chloride, and iron (III) chloride, the one or more reagent includes sodium hydroxide.

4. The method of claim 2, wherein, when the plurality of precursors is at least one of:
titanium dioxide spheres, iron (III) nitrate, and one of strontium nitrate and strontium hydroxide; and
titania nanotubes, strontium nitrate, and iron (III) nitrate, the one or more reagent includes ammonia.

5. The method of claim 1, comprising forming the organic solvent based reaction solution, the plurality of precursors are chosen from strontium nitrate, strontium acetate, strontium chloride, strontium hydroxide, titanium isopropoxide, titanium nitrate, titanium acetate, metatitanic acid, iron (III) chloride, iron (III) nitrate, iron (III) acetate, and iron (III) isopropoxide.

6. The method of any one of claims 1 through 5, wherein, when the plurality of precursors includes titanium nitrate, strontium nitrate, and iron (III) nitrate, the one or more reagent includes ethylene glycol and dimethylformamide.

7. The method of any one of claims 1 through 5, wherein, when the plurality of precursors include at least one of: titanium acetate, strontium acetate, and iron (III) acetate; and
titanium chloride, strontium chloride, and iron (III) chloride, the one or more reagent includes ethanol.

8. The method of claim 5, wherein, when the plurality of precursors include titanium isopropoxide, strontium acetate, and iron (III) isopropoxide, the one or more reagent includes 2-methoxyethanol, and wherein the organic solvent based reaction solution further includes at least one reagent chosen from at least one of a tri-block copolymer, water, ammonium, and potassium hydroxide.

9. The method of any one of claims 1 through 5, wherein, when the plurality of precursors include metatitanic acid, strontium nitrate, and iron (III) nitrate, the one or more reagent includes a plurality of reagents including ethanol, potassium hydroxide, and water.

10. The method of any one of claims 1 through 5, wherein, when the plurality of precursors include titanium isopropoxide, strontium hydroxide, and iron (III) nitrate, the one or more reagent includes ethanol, 2-methoxyethanol, water, and potassium hydroxide.

11. The method of any one of claims 1 through 10, further comprising:
separating the iron doped strontium titanate powder from the one of the aqueous reaction solution and the organic solvent based reaction solution;
washing the iron doped strontium titanate powder; and
drying the iron doped strontium titanate powder.

## Patentansprüche

1. Verfahren zur Herstellung von eisendotiertem Strontiumtitanatpulver, umfassend:
Bilden einer von einer wässrigen Reaktionslösung und einer Reaktionslösung in einem organischen Lösungsmittel, wobei die eine von der wässrigen Reaktionslösung und der Reaktionslösung in einem organischen Lösungsmittel eine Vielzahl von Vorläuferstoffen und ein oder mehrere Reagenzien umfasst, wobei die Vielzahl von Vorläuferstoffen ausgewählt ist aus Strontiumnitrat, Strontiumacetat, Strontiumchlorid, Strontiumhydroxid, Titantetrachlorid, Titan (IV)-oxychlorid, Titanisopropoxid, Titannitrat, Titanacetat, Titanoxid-Nanoröhrchen, Titanoxid-(Nano)kügelchen, Metatitansäure, Eisen(III)-chlorid, Eisen(III)-nitrat, Eisen(III)-acetat und Einsen(III)-isopropoxid, und das eine oder die mehreren Reagenzien ausgewählt sind aus Natriumhydroxid, Ammoniak, Ethylenglycol, Dimethylformamid, Ethanol, 2-Methoxyethanol, Kaliumhydroxid und Wasser; und
Anwenden einer Wärmebehandlung an die eine von der wässrigen Reaktionslösung und der Reaktionslösung in einem organischen Lösungsmittel, um das eisendotierte Strontiumtitanatpulver zu bilden, wobei die Wärmebehandlung Erhitzen der einen von der wässrigen Reaktionslösung und der Reaktionslösung in einem organischen Lösungsmittel auf eine Reaktionstemperatur in einem Bereich von 120 Grad Celsius bis 400 Grad Celsius und einen Reaktionsdruck in einem Bereich von 1 bar bis 300 bar umfasst.

2. Verfahren gemäß Anspruch 1, umfassend Bilden der wässrigen Reaktionslösung, wobei die Vielzahl von Vorläuferstoffen ausgewählt ist aus einem von:
Titantetrachlorid, Strontiumchlorid und Eisen(III)-chlorid;
Titandioxidkügelchen, Eisen(III)-nitrat und einem von Strontiumnitrat und Strontiumhydroxid; und
Titanoxid-Nanoröhrchen, Strontiumnitrat und Eisen(III)-nitrat.

3. Verfahren gemäß Anspruch 2, wobei, wenn die Vielzahl von Vorläuferstoffen Titantetrachlorid, Strontiumchlorid und Eisen(III)-chlorid ist, das eine oder die mehreren Reagenzien Natriumhydroxid umfassen.

4. Verfahren gemäß Anspruch 2, wobei, wenn die Vielzahl von Vorläuferstoffen wenigstens eines von:
Titandioxidkügelchen, Eisen(III)-nitrat und eines von Strontiumnitrat und Strontiumhydroxid; und
Titanoxid-Nanoröhrchen, Strontiumnitrat und Eisen (III)-nitrat ist, das eine oder die mehreren Reagenzien Ammoniak umfassen.

5. Verfahren gemäß Anspruch 1, umfassend Bilden der Reaktionslösung auf der Basis von organischem Lösungsmittel, wobei die Vielzahl von Vorläuferstoffen ausgewählt ist aus Strontiumnitrat, Strontiumacetat, Strontiumchlorid, Strontiumhydroxid, Titanisopropoxid, Titannitrat, Titanacetat, Metatitansäure, Eisen(III)-chlorid, Eisen(III)-nitrat, Eisen(III)-acetat und Eisen(III)-isopropoxid.

6. Verfahren gemäß einem der Ansprüche 1 bis 5, wobei, wenn die Vielzahl von Vorläuferstoffen Titannitrat, Strontiumnitrat, und Eisen(III)-nitrat umfasst, das eine oder die mehreren Reagenzien Ethylenglycol und Dimethylformamid umfassen.

7. Verfahren gemäß einem der Ansprüche 1 bis 5, wobei, wenn die Vielzahl von Vorläuferstoffen wenigstens eines von: Titanacetat, Strontiumacetat und Eisen(III)-acetat; und
Titanchlorid, Strontiumchlorid und Eisen(III)-chlorid umfasst, das eine oder die mehreren Reagenzien Ethanol umfassen.

8. Verfahren gemäß Anspruch 5, wobei, wenn die Vielzahl von Vorläuferstoffen Titanisopropoxid, Strontiumacetat und Eisen(III)-isopropoxid umfasst, das eine oder die mehreren Reagenzien 2-Methoxyethanol umfassen, und wobei die Reaktionslösung auf der Basis von organischem Lösungsmittel ferner wenigstens ein Reagens ausgewählt aus wenigstens einem von einem Triblock-Copolymer, Wasser, Ammonium und Kaliumhydroxid umfasst.

9. Verfahren gemäß einem der Ansprüche 1 bis 5, wobei, wenn die Vielzahl von Vorläuferstoffen Metatitansäure, Strontiumnitrat und Eisen(III)-nitrat umfasst, das eine oder die mehreren Reagenzien eine Vielzahl von Reagenzien umfassend Ethanol, Kaliumhydroxid und Wasser umfassen.

10. Verfahren gemäß einem der Ansprüche 1 bis 5, wobei, wenn die Vielzahl von Vorläuferstoffen Titanisopropoxid, Strontiumhydroxid und Eisen(III)-nitrat umfasst, das eine oder die mehreren Reagenzien Ethanol, 2-Methoxyethanol, Wasser und Kaliumhydroxid umfassen.

11. Verfahren gemäß einem der Ansprüche 1 bis 10, ferner umfassend:
Abtrennen des eisendotierten Strontiumtitanatpulvers von der einen von der wässrigen Reaktionslösung und der Reaktionslösung auf der Basis von organischem Lösungsmittel;
Waschen des eisendotierten Strontiumtitanatpulvers; und
Trocknen des eisendotierten Strontiumtitanatpulvers.

## Revendications

1. Procédé de formation d'une poudre de titanate de strontium dopé au fer, comprenant :
la formation de l'une d'une solution de réaction aqueuse et d'une solution de réaction à base de solvant organique, ladite l'une de la solution de réaction aqueuse et de la solution de réaction à base de solvant organique comprenant une pluralité de précurseurs et un ou plusieurs réactifs, la pluralité de précurseurs étant choisie parmi le nitrate de strontium, l'acétate de strontium, le chlorure de strontium, l'hydroxyde de strontium, le tétrachlorure de titane, l'oxychlorure de titane (IV), l'isopropoxyde de titane, le nitrate de titane, l'acétate de titane, les nanotubes d'oxyde de titane, les (nano)sphères d'oxyde de titane, l'acide métatitanique, le chlorure de fer (III), le nitrate de fer (III), l'acétate de fer (III) et l'isopropoxyde de fer (III), et lesdits un ou plusieurs réactifs étant choisis parmi l'hydroxyde de sodium, l'ammoniaque, l'éthylène glycol, le diméthylformamide, l'éthanol, le 2-méthoxyéthanol, l'hydroxyde de potassium, et l'eau ; et
l'application d'un traitement thermique à l'une de la solution de réaction aqueuse et de la solution de réaction à base de solvant organique pour former la poudre de titanate de strontium dopé au fer, le traitement thermique comprenant le chauffage de l'une de la solution de réaction aqueuse et de la solution de réaction à base de solvant organique à une température de réaction de 120 degrés Celsius à 400 degrés Celsius et à une pression de réaction de 1 bar à 300 bars.

2. Procédé selon la revendication 1, comprenant la formation de la solution de réaction aqueuse, la pluralité de précurseurs étant choisie parmi l'un de :
tétrachlorure de titane, chlorure de strontium, et chlorure de fer (III) ;
sphères de dioxyde de titane, nitrate de fer (III), et l'un du nitrate de strontium et de l'hydroxyde de strontium ; et
nanotubes d'oxyde de titane, nitrate de strontium, et nitrate de fer (III).

3. Procédé selon la revendication 2, dans lequel, lorsque la pluralité de précurseurs est constituée de :
tétrachlorure de titane, chlorure de strontium, et chlorure de fer (III),
lesdits un ou plusieurs réactifs comprennent de l'hydroxyde de sodium.

4. Procédé selon la revendication 2, dans lequel, lorsque la pluralité de précurseurs est constituée d'au moins l'un de :
sphères de dioxyde de titane, nitrate de fer (III), et l'un du nitrate de strontium et de l'hydroxyde de strontium ; et
nanotubes d'oxyde de titane, nitrate de strontium, et nitrate de fer (III),
lesdits un ou plusieurs réactifs comprennent de l'ammoniaque.

5. Procédé selon la revendication 1, comprenant la formation de la solution de réaction à base de solvant organique, la pluralité de précurseurs étant choisie parmi le nitrate de strontium, l'acétate de strontium, le chlorure de strontium, l'hydroxyde de strontium, l'isopropoxyde de titane, le nitrate de titane, l'acétate de titane, l'acide métatitanique, le chlorure de fer (III), le nitrate de fer (III), l'acétate de fer (III), et l'isopropoxyde de fer (III).

6. Procédé selon l'une quelconque des revendications 1 à 5, dans lequel, lorsque la pluralité de précurseurs comprend :
nitrate de titane, nitrate de strontium, et nitrate de fer (III),
lesdits un ou plusieurs réactifs comprennent de l'éthylène glycol et du diméthylformamide.

7. Procédé selon l'une quelconque des revendications 1 à 5, dans lequel, lorsque la pluralité de précurseurs comprend au moins l'un de :
acétate de titane, acétate de strontium, et acétate de fer (III) ; et
chlorure de titane, chlorure de strontium et chlorure de fer (III),
lesdits un ou plusieurs réactifs comprennent de l'éthanol.

8. Procédé selon la revendication 5, dans lequel, lorsque la pluralité de précurseurs comprend :
isopropoxyde de titane, acétate de strontium, et isopropoxyde de fer (III),
lesdits un ou plusieurs réactifs comprennent du 2-méthoxyéthanol,
et dans lequel la solution de réaction à base de solvant organique comprend en outre au moins un réactif choisi parmi au moins l'un d'un copolymère tribloc, de l'eau, de l'ammonium, et de l'hydroxyde de potassium.

9. Procédé selon l'une quelconque des revendications 1 à 5, dans lequel, lorsque la pluralité de précurseurs comprend :
acide métatitanique, nitrate de strontium, et nitrate de fer (III),
lesdits un ou plusieurs réactifs comprennent une pluralité de réactifs, dont l'éthanol, l'hydroxyde de potassium et l'eau.

10. Procédé selon l'une quelconque des revendications 1 à 5, dans lequel, lorsque la pluralité de précurseurs comprend :
isopropoxyde de titane, hydroxyde de strontium, et nitrate de fer (III),
lesdits un ou plusieurs réactifs comprennent de l'éthanol, du 2-méthoxyéthanol, de l'eau et de l'hydroxyde de potassium.

11. Procédé selon l'une quelconque des revendications 1 à 10, comprenant en outre :
la séparation de la poudre de titanate de strontium dopé au fer de ladite l'une de la solution de réaction aqueuse et de la solution de réaction à base de solvant organique ;
le lavage de la poudre de titanate de strontium dopé au fer ; et
le séchage de la poudre de titanate de strontium dopé au fer.
